(19) Europäisches Patentamt
European Patent Office
Office européen des brevets

(11) **EP 2 209 305 B1**

(12) **FASCICULE DE BREVET EUROPEEN**

(45) Date de publication et mention
de la délivrance du brevet:
**03.10.2012 Bulletin 2012/40**

(51) Int Cl.:
*G01J 5/22* *(2006.01)*      *H04N 5/365* *(2011.01)*
*H04N 5/33* *(2006.01)*

(21) Numéro de dépôt: **09306303.0**

(22) Date de dépôt: **22.12.2009**

(54) **Dispositif pour la détection d'un rayonnement électromagnétique**

Vorrichtung zur Erkennung von elektromagnetischer Strahlung

Device for detecting electromagnetic radiation

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.01.2009 FR 0950193**

(43) Date de publication de la demande:
**21.07.2010 Bulletin 2010/29**

(73) Titulaire: **ULIS**
**38113 Veurey Voroize (FR)**

(72) Inventeur: **Legras, Olivier**
**38500 VOIRON (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**EP-A1- 1 211 888**      **US-A1- 2002 074 499**
**US-A1- 2003 160 171**      **US-B1- 6 791 610**

**Description**

DOMAINE DE L'INVENTION

La présente invention a trait au domaine de l'imagerie et de la pyrométrie infrarouge.

Plus particulièrement, l'invention concerne la réjection de mode commun lors de la lecture de bolomètres.

**ETAT ANTERIEUR DE LA TECHNIQUE**

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés « détecteurs quantiques », qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur,
- des moyens d'isolation thermique du détecteur, de telle sorte à permettre à celui-ci de s'échauffer sous l'action du rayonnement infrarouge,
- des moyens de thermométrie qui, dans le cadre d'un détecteur bolométrique, mettent en oeuvre un élément résistif formé à partir d'électrodes et d'un matériau sensible, dit bolométrique,
- et des moyens de lecture des signaux électriques fournis par les moyens de thermométrie.

Les moyens d'absorption du rayonnement et de thermométrie sont intégrés dans une membrane suspendue par les moyens d'isolation thermique au dessus d'un substrat dans lequel sont disposés les moyens de lecture.

Les détecteurs destinés à l'imagerie infrarouge sont classiquement réalisés sous la forme d'une matrice de détecteurs élémentaires selon une ou deux dimensions, ladite matrice étant formée de manière dite « monolithique » ou reportée sur le substrat, généralement réalisé en silicium, dans lequel sont constitués des moyens d'adressage séquentiel des détecteurs élémentaires, et des moyens d'excitation électrique et de pré-traitement des signaux électriques formés à partir de ces détecteurs élémentaires. Ce substrat et les moyens intégrés sont communément désignés par le terme de « circuit de lecture ».

Pour obtenir une image par l'intermédiaire de ce détecteur, le rayonnement issu de la scène est projeté à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

La difficulté essentielle de mise en oeuvre des détecteurs bolométriques réside dans la très faible variation relative de leur résistance électrique, représentative des variations locales de température d'une scène observée, par rapport à la valeur moyenne de ces résistances.

En effet, les lois physiques d'émission thermique dans l'infrarouge de la scène observée, et typiquement entre 8 et 14 micromètres (correspondant à la bande de transparence de l'atmosphère terrestre dans laquelle sont habituellement utilisés les détecteurs bolométriques), conduisent à une puissance différentielle dP au niveau du plan focal détecteur de l'ordre de 50 $\mu$W/cm$^2$ lorsque la température de scène varie de 1K autour de 300 K. La détermination de cette valeur est aisément à la portée de l'homme du métier, en appliquant les lois physiques précitées.

Cette estimation est valable pour une optique ouverte à f/1, une transmission élevée entre la scène et le détecteur, et lorsque le détecteur ne reçoit qu'une quantité négligeable d'énergie en dehors de la bande de longueur d'onde spécifiée, par exemple et typiquement si le boîtier est muni d'une fenêtre transparente dans cet intervalle et opaque en deçà et au-delà des limites indiquées.

Corollairement, la variation de température $d\theta$ d'un bolomètre à l'équilibre thermique, liée à une puissance infrarouge $dP$ absorbée sur sa surface S est donnée par l'expression suivante :

$$dT = Rth \cdot dP \qquad (1)$$

où *Rth* est une résistance thermique entre la partie sensible du bolomètre, qui s'échauffe sous l'effet du rayonnement infrarouge, et le substrat isotherme qui le porte.

Ainsi, pour un bolomètre de dimensions typiques de l'ordre de 30 μm x 30 μm, ce qui représente une surface de $9.10^{-6}$ cm$^2$, la résistance thermique typique selon l'état de la technique, est de l'ordre de 20 à 60 MK/W, ce qui conduit à un échauffement du bolomètre de l'ordre de 0,01 K à 0,03 K lorsque la température de l'élément de scène vu par ce bolomètre varie de 1 K.

Si $R_b$ désigne la résistance électrique vue entre les deux pôles d'amenée du courant au niveau du matériau sensible bolométrique, la variation de résistance $dR_b$ qui en résulte est exprimée par l'expression suivante :

$$dR_b = R_b . TCR . d\theta \qquad (2)$$

où *TCR* est un coefficient de variation relatif de résistance du matériau constituant la partie sensible du bolomètre au voisinage de la température de fonctionnement θ, classiquement voisin de -2 % par K pour les matériaux usuels dans ce domaine (oxydes de vanadium, silicium amorphe). En conséquence, la variation relative de résistance *dR*/*R* consécutive à un différentiel de 1 K sur la scène est de l'ordre de 0,04% , soit $4.10^{-4}$/K.

Or, il est demandé aujourd'hui des résolutions thermiques d'imagerie nettement meilleures que 1 K, et typiquement 0,05 K, voire moins. De tels résultats peuvent être obtenus par l'élaboration de structures présentant des résistances thermiques *Rth* très élevées de par la mise en oeuvre de techniques sophistiquées. Cependant le besoin demeure de mesurer d'infimes variations relatives de résistance et typiquement, ainsi qu'indiqué précédemment, de l'ordre de quelques $10^{-6}$, pour résoudre des variations temporelles et spatiales de température de quelques dizaines de milliKelvin.

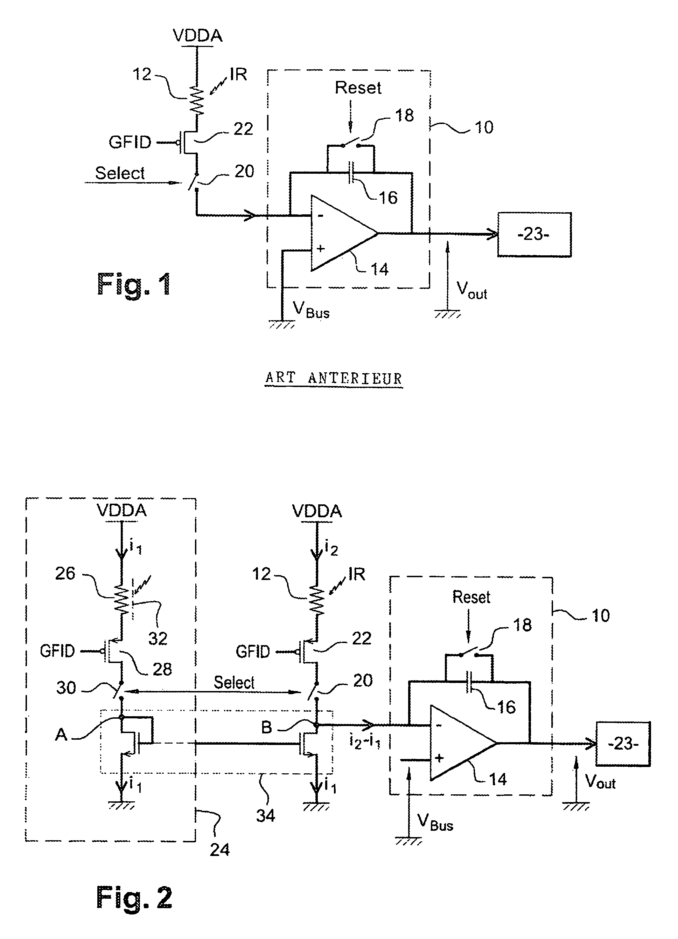

Afin d'expliciter la difficulté d'exploiter une aussi faible variation, un circuit de lecture est schématisé sur la figure 1. Un bolomètre résistif **12** de résistance $R_b$, soumis à un rayonnement infrarouge et connecté à l'une de ses bornes à une tension de polarisation constante *VDDA* prédéterminée. Le circuit de lecture comprend un intégrateur **10** comprenant :

- un amplificateur opérationnel **14,** dont l'entrée non inverseuse (+) est mise à une tension constante *VBUS* prédéterminée ;
- un condensateur **16,** de capacité $C_{int}$ prédéterminée, connecté entre l'entrée inverseuse (-) de l'amplificateur **14** et la sortie de celui-ci ;
- un interrupteur de remise à zéro **18** connecté en parallèle du condensateur **16,** et pilotable au moyen d'un signal « Reset ».

Le circuit de lecture comprend en outre :

- un premier interrupteur **20** de lecture, pilotable au moyen d'un signal « Select » et connecté à l'entrée inverseuse (-) de l'amplificateur opérationnel **14 ;**
- un transistor MOS **22** d'injection, dont la grille est mise à une tension *GFID* constante prédéterminée, dont la source est connectée à l'autre borne du bolomètre **12,** et dont le drain est connecté à l'autre borne du premier interrupteur **20** de sélection ; et
- une unité **23** de traitement d'information, connectée en sortie de l'amplificateur opérationnel **14,** et déterminant en fonction de la tension $V_{out}$ en sortie de celui-ci la variation de la résistance du bolomètre **12** induite par le rayonnement infrarouge reçu par ce dernier, et donc ce rayonnement infrarouge.

Au début d'un cycle de lecture du bolomètre **12,** l'interrupteur de remise à zéro **18,** qui est à l'état fermé suite à un cycle de décharge du condensateur **16,** est basculé à l'état ouvert par réglage du signal « Reset » à une valeur appropriée. Le premier interrupteur **20** de lecture, qui est dans l'état ouvert, est basculé à l'état fermé par réglage du signal « Select ». Le courant traversant le bolomètre **12** est alors intégré par le condensateur **16.** Lorsqu'une durée d'intégration $\Delta T_{int}$ prédéterminée s'est écoulée depuis le début du cycle de lecture, le premier interrupteur de lecture **20** est basculé dans son état ouvert. La tension $V_{out}$ en sortie de cet intégrateur, image de la résistance $R_b$ du bolomètre, est alors donnée par l'expression :

$$V_{out} = \frac{V_{pol}}{R_b} \times \frac{\Delta T_{\mathrm{int}}}{C_{\mathrm{int}}} \qquad (3)$$

où $V_{pol}$ est la tension de polarisation aux bornes du bolomètre **12**, en admettant, pour simplifier, que $R_b$ varie peu pendant la durée d'intégration Tint.

Ainsi, une matrice de N résistances (bolomètres) pourrait être lue selon ce principe à l'aide de l'intégration simultanée (au moyen de N intégrateurs) ou séquentielle (sur un intégrateur disposé en bout de ligne ou en bout de colonne, voire un seul intégrateur pour la matrice).

Lorsque la matrice ainsi réalisée est éclairée par la projection d'une scène infrarouge, $V_{out}$ va présenter des variations spatiales (issues de chaque bolomètre) représentatives de la scène. Il est rappelé que la tension $V_{out}$ telle qu'exprimée précédemment est constituée pour une très grande part, d'une partie constante d'un détecteur à l'autre, qui ne présente donc aucun intérêt en termes d'imagerie.

Par ailleurs, de par l'existence du couplage thermique entre le substrat et le bolomètre, les variations thermiques subies par le substrat se reportent sur le bolomètre. Comme les bolomètres usuels présentent une sensibilité très importante à de telles variations, ceci a pour conséquence que le signal de sortie est perturbé par cette composante de courant parasite, ce qui nuit à la qualité de la détection du rayonnement infrarouge.

L'ensemble de ces contributions, à savoir la partie constante de $V_{out}$ et les précédentes perturbations dues au substrat, contenues dans le signal $V_{out}$, est usuellement appelé signal « de mode commun ».

Enfin, la lecture d'un bolomètre impose de faire circuler dans celui-ci un courant électrique. De fait, le bolomètre s'échauffe par effet joule (usuellement appelé « auto-échauffement ») ajoutant encore en cela une perturbation parasitant le signal utile lié à la scène. Cet auto-échauffement $\Delta\theta(t)$, fonction du temps, peut être déterminé à partir de l'équation différentielle suivante :

$$C_{th} \times \frac{\partial \Delta\theta(t)}{\partial t} = \frac{V_{pol}^2}{R_b(\theta(t))} - \frac{\Delta\theta(t)}{R_{th}}$$

où $C_{th}$ est la capacité calorifique de la membrane sensible.

Pour un temps d'intégration $T_{int}$ très court de l'ordre de quelques dizaines de microsecondes après l'application de la tension $V_{pol}$ à $t = 0$, l'échauffement peut être considéré comme linéaire et donné par la relation :

$$\Delta\theta = \frac{V_{pol}^2}{C_{th} \times R_b(\theta(t = 0))} T_{\mathrm{int}}$$

Il apparait alors que, pour des valeurs typiques de $C_{th}$, $R_{th}$, $V_{pol}$ et $T_{int}$, cette élévation de température par auto-échauffement atteint typiquement plusieurs degrés Kelvin. Ainsi, des variations spatiales technologiques de $C_{th}$ ou $R_b$ même très limitées, par exemple de l'ordre de 1%, se traduisent par des variations spatiales de température de chaque membrane à la fin du temps d'intégration de l'ordre de 20mK pour un échauffement électrique $\Delta\theta$ de 2°, c'est-à-dire du même ordre que l'échauffement provoqué par une augmentation de température de scène de 1K.

Ainsi, ces dispersions viennent également perturber la représentativité du signal $V_{out}$ par rapport aux variations spatiales et temporelles de puissance radiative, seules représentatives de la scène observée, et qui constituent le signal utile.

Pour pallier ces inconvénients, il a été proposé une structure résistive dite de « référence » décrite dans le document « Performance of 320x240 Uncooled Bolometer-type Infrared Focal Plane Arrays » de Yutaka Tanake et al., Proc. SPIE, vol 5074.

D'autres structures sont proposées dans les documents US 2002/074499 A1, US 6 791 610 B1, EP 1 211 888 A1 et US 2003/160171 A1.

Le principe d'une structure résistive de référence est d'associer au bolomètre résistif **12** de la figure 1, un second bolomètre résistif identique, polarisé et connecté au substrat de manière identique au premier bolomètre. Ce second bolomètre est en outre agencé de manière à être essentiellement insensible au flux en provenance de la scène, typiquement par une membrane métallique opaque. Les premier et second bolomètres résistifs sont par ailleurs associés de sorte que le courant traversant le second bolomètre est soustrait du courant traversant le premier bolomètre et que ce soit cette différence de courants qui soit utilisée par le circuit de lecture.

Afin de distinguer les fonctions de ces deux bolomètres, on utilisera l'expression bolomètre « d'imagerie » pour le premier bolomètre, et l'expression bolomètre « de référence » pour le second bolomètre, même si dans certaines applications, de thermométrie par exemple, on ne forme pas forcement une image, mais par exemple une mesure de température.

Une structure de référence **24** est schématiquement illustrée à la figure 2, qui reprend les éléments de la figure 1, auxquels est associé un circuit dit « de référence » **24**. Le circuit de référence **24** comprend un bolomètre de référence **26**, un transistor MOS de polarisation **28** et un second interrupteur de lecture **30**, respectivement sensiblement identiques au bolomètre d'imagerie **12**, au transistor MOS d'injection **22** et au premier interrupteur de lecture **20**.

Les éléments **26, 28** et **30** sont de plus polarisés et agencés de la même manière que les éléments **12, 22** et **20**, à la seule différence que le bolomètre de référence **26** est pourvu d'une membrane métallique opaque **32** le protégeant du rayonnement issu de la scène.

La structure résistive de référence comporte enfin un miroir de courant **34**, dont une branche d'entrée est connectée à une borne A du second interrupteur de lecture **30**, et dont l'autre branche d'entrée est connectée à une borne B du premier interrupteur de lecture **20**. Ce miroir de courant **34** reproduit sensiblement le courant $i_1$ traversant le bolomètre de référence **26** au niveau de la borne B.

La mise en oeuvre de miroirs de courant permet de ne disposer que d'une seule structure de référence par ligne, l'ensemble de ces structures étant disposé selon une « colonne » de référence pour un détecteur matriciel. Les miroirs de courant sont des structures connues de l'homme du métier. Elles permettent de manière générale la copie d'un courant de référence dans une structure éloignée, et en particulier la distribution de ce courant de référence dans une multitude d'éléments de circuiterie, indépendamment de leur charge résistive.

Ainsi, le courant $i_1$ traversant le bolomètre de référence est sensiblement égal au courant de mode commun, et le bolomètre de référence est sujet aux mêmes variations thermiques en provenance du substrat que le bolomètre d'imagerie. La différence $i_2 - i_1$ entre le courant $i_2$ traversant le bolomètre d'imagerie et le courant $i_1$ traversant le bolomètre de référence est alors sensiblement exempte des perturbations constituées par le courant de mode commun et la composante liée aux variations thermiques du substrat, au moins tant que le substrat est essentiellement isotherme. Cette différence de courant $i_2 - i_1$ correspond donc sensiblement au courant induit par la variation de résistance du bolomètre d'imagerie **12** du fait de son échauffement par le rayonnement infrarouge issu de la scène.

Classiquement, il existe deux agencements utilisant des bolomètres de référence.

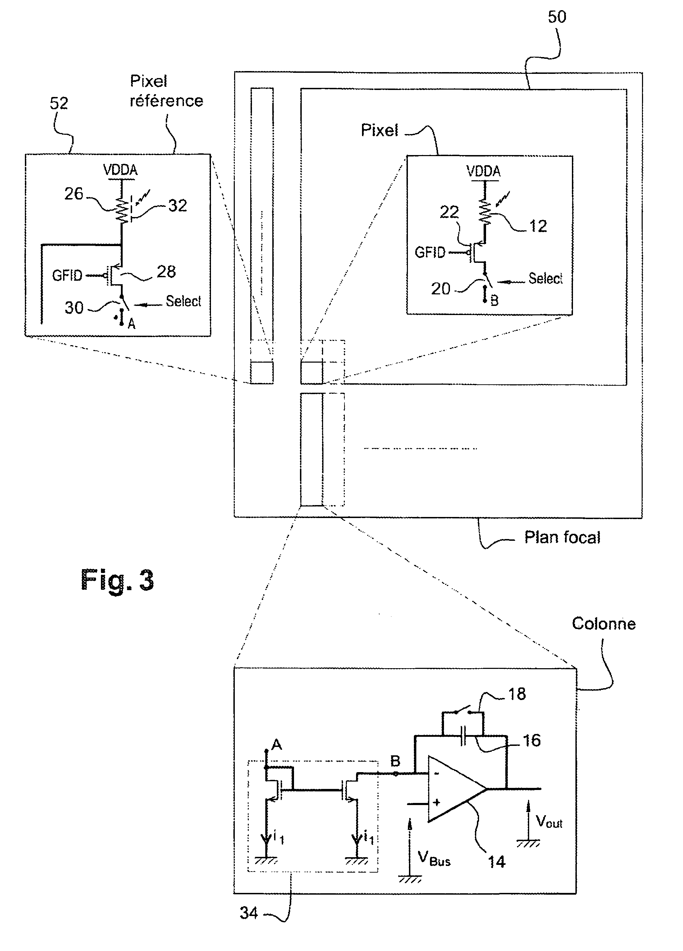

Dans un premier agencement illustré à la figure 3, un bolomètre de référence **26** est prévu pour chaque ligne d'une matrice **50** de bolomètres d'imagerie et fournit donc, via le miroir de courant **34**, un courant dit « de référence » pour l'ensemble des bolomètres d'imagerie de la ligne. Les phénomènes d'auto-échauffement de ces bolomètres d'imagerie **12** sont ainsi compensés puisque le bolomètre de référence **26** subit les mêmes cycles de polarisation que les bolomètres d'imagerie **12** de la ligne associée. En revanche, prévoir un bolomètre de référence **26** pour chaque ligne de la matrice de bolomètres d'imagerie génère un bruit spatial en ligne du fait des dispersions technologiques des bolomètres de référence.

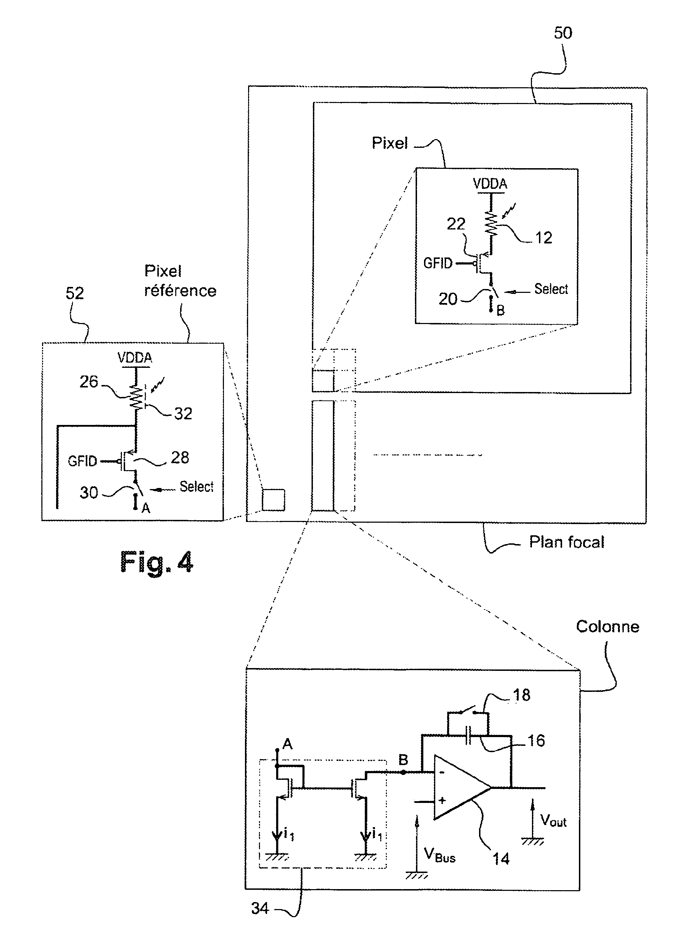

Dans un second agencement illustré à la figure 4, un unique bolomètre de référence **26** est prévu pour l'ensemble des bolomètres d'imagerie de la matrice **50**. Le courant issu de celui-ci est recopié alors par un jeu de miroirs de courant **34**. Le bruit spatial généré par les dispersions technologiques est ainsi évité. Toutefois, le cycle thermique de cet unique bolomètre de référence **26** est sensiblement différent de celui des bolomètres d'imagerie **12**. En effet, contrairement à un bolomètre d'imagerie qui est polarisé lors de la lecture de sa ligne, le bolomètre de référence **26** est polarisé à chaque lecture de ligne. La constante de temps thermique du bolomètre de référence $R_{th}.C_{th}$ de l'ordre de quelques millisecondes, ne lui permet pas de revenir à sa température d'équilibre avant chaque cycle de lecture (d'intégration). En conséquence, le bolomètre de référence commence le cycle d'intégration suivant avec une valeur différente de résistance initiale. Il en résulte qu'au bout d'un certain nombre de cycles de lecture, l'auto-échauffement du bolomètre de référence **26** diffère sensiblement de l'auto-échauffement des bolomètres d'imagerie **12**, de sorte que la réjection de cette composante est de piètre qualité.

Il est à noter que les phénomènes d'auto-échauffement sont d'autant plus prononcés que l'isolation des membranes des bolomètres d'imagerie **12** est élevée, ce qui est le cas dans les détecteurs haut de gamme, pour lesquels on cherche à maximiser $R_{th}$ pour maximiser la sensibilité, ce qui conduit aussi à diminuer $C_{th}$ pour maintenir une constante de temps thermique compatible avec les standards de fréquence trame d'imagerie. De ce fait, l'échauffement après chaque lecture est supérieur pour des stimuli semblables, et finalement l'élévation résiduelle de température au départ du cycle suivant est d'autant plus sensible.

La réjection du courant de mode commun est donc d'autant plus délicate que le détecteur est sensible, ce qui limite finalement les améliorations de performances qu'il est possible d'apporter à ces détecteurs.

Par ailleurs, une structure résistive de référence est techniquement difficile à produire. En effet, pour obtenir un fonctionnement satisfaisant de celle-ci, il est nécessaire que la membrane métallique **26** protégeant le bolomètre de référence soit totalement imperméable au flux issu de la scène, tout en étant thermiquement isolée des autres éléments de la structure pour éviter toute perturbation thermique sur le bolomètre de référence. Une telle membrane est difficile à concevoir et à produire. En outre, la complexification sensible qu'implique l'élaboration d'une telle membrane entraîne nécessairement un surcoût, du fait d'étapes supplémentaires de fabrication et d'un rendement de production non idéal.

## EXPOSE DE L'INVENTION

Le but de la présente invention est de résoudre les problèmes susmentionnés en proposant une structure de réjection de mode commun et de compensation de l'auto-échauffement qui soit de conception simple et ne générant aucun bruit spatial.

A cet effet, l'invention a pour objet un dispositif pour la détection d'un rayonnement électromagnétique tel que décrit dans la revendication 1 et un détecteur bolométrique tel que décrit dans la revendication 3.

En d'autres termes, le bolomètre de référence de l'état de la technique est remplacé par une structure électronique qui synthétise la partie non utile du courant issu des bolomètres d'imagerie, valide quelles que soient les conditions thermiques et radiatives, et quelle que soit la fréquence d'adressage des bolomètres d'imagerie, dans l'objet d'être retranché au courant issu desdits bolomètres.

On sait que le comportement thermique d'un bolomètre, et particulièrement celui d'une membrane suspendue au dessus d'un substrat par des bras de soutien, est complexe. Classiquement, ce comportement est en effet modélisable par des équations différentielles n'ayant pas de solution analytique.

Or, ainsi que déjà dit, le signal utile compris dans la mesure est très faible. En effet, comme il a été décrit précédemment, la variation relative de résistance $dR/R$ d'un bolomètre d'imagerie, consécutive à un différentiel de 1 K sur la scène est usuellement de l'ordre de 0,04 %, soit $4. 10^{-4}$/K. De fait, remplacer le bolomètre de référence par une estimation, source d'imprécision, semble être inapproprié.

Toutefois, un gain notable de précision et de flexibilité est par ailleurs réalisé dans d'autres domaines.

Tout d'abord, l'utilisation d'une estimation permet de s'affranchir du problème de dispersion technologique rencontré lorsque plusieurs bolomètres de référence sont utilisés. En effet, l'estimation de courant mise en oeuvre est la même pour tous les bolomètres d'imagerie.

Ensuite, l'estimation mise en oeuvre permet de s'affranchir du problème d'auto-échauffement résiduel rencontré lorsqu'un unique bolomètre de référence est utilisé. En effet, l'estimation permet de simuler, pour un cycle de lecture quelconque, l'auto-échauffement d'un bolomètre d'imagerie. On peut ainsi voir le circuit de réjection selon l'invention comme un « bolomètre de référence », dont la résistance est initialisée avant chaque cycle de lecture à une valeur de référence correspondant à celle qu'aurait le bolomètre d'imagerie, s'il était insensibilisé au flux de scène, à l'instant initial de chaque cycle d'intégration. Ainsi ce « bolomètre de référence » connaît les mêmes cycles d'auto-échauffement qu'un bolomètre d'imagerie, quelles que soient les caractéristiques thermiques des bolomètres d'imagerie et la fréquence d'adressage de ces derniers, de sorte qu'une réjection efficace de ce phénomène est réalisée.

Cette qualité de réjection est inaccessible aux bolomètres de référence « naturels » de l'état de la technique, car l'échauffement résiduel, mémoire des cycles d'adressage antérieurs, ne peut être effacé dans l'état de la technique.

Enfin, l'estimation mise en oeuvre est intrinsèquement insensible au flux radiatif, puisqu'elle est formée par calcul, ce qui élimine la nécessité de construire un écran opaque au rayonnement, nécessaire aux bolomètres de référence formés à partir de structures bolométriques proprement dites, ce qui améliore notoirement le coût de fabrication du détecteur.

Selon un mode de réalisation particulier de l'invention, dans lequel le bolomètre comporte une membrane suspendue au dessus d'un substrat destiné à être agencé dans le plan focal d'une optique, le module d'estimation comprend :

•   au moins un capteur de température apte à mesurer une température du substrat,
•   un module de calcul du courant de mode commun en fonction de la température du substrat mesurée et d'un modèle thermique du bolomètre résistif.

En d'autres termes, en connaissant une température du substrat, il est possible d'estimer le courant de mode commun.

L'invention a également pour objet un détecteur comportant une matrice de bolomètres résistifs, chacun des bolomètres étant associé à un circuit de polarisation apte à polariser lesdits bolomètres sous une tension de polarisation prédéterminée, un module de réjection apte à générer un courant de mode commun, ledit courant étant recopié dans chacune des colonnes par un miroir de courant, et un circuit de mesure apte à être connecté au bolomètre et au module de réjection pour mesurer la différence entre le courant circulant dans le bolomètre lors de sa polarisation et la copie du courant de mode commun généré par le module de réjection. Selon l'invention, l'association du bolomètre, du circuit de polarisation, du module de réjection et du circuit de mesure forme un dispositif du type précité.

## BREVE DESCRIPTION DES FIGURES

L'invention sera mieux comprise à la lecture de la description qui suit, donnée uniquement à titre d'exemple, et réalisée en relation avec les dessins annexés, dans lesquels des références identiques désignent des éléments identiques ou analogues, et dans lesquels :

- la figure 1 est une vue schématique d'un bolomètre sensible et de son dispositif de lecture selon l'état antérieur de la technique, discuté dans le préambule;
- la figure 2 est une vue schématique complétant la figure 1 avec compensation de mode commun à l'aide d'une structure résistive de référence selon l'état antérieur de la technique et des éléments de circuiterie associés, discuté dans le préambule;
- les figures 3 et 4 sont des vues schématiques d'agencements possibles de structures résistives de référence dans un détecteur bolométrique ; et
- la figure 5 est une vue schématique d'un détecteur bolométrique selon l'invention.

## DESCRIPTION DETAILLEE DE L'INVENTION

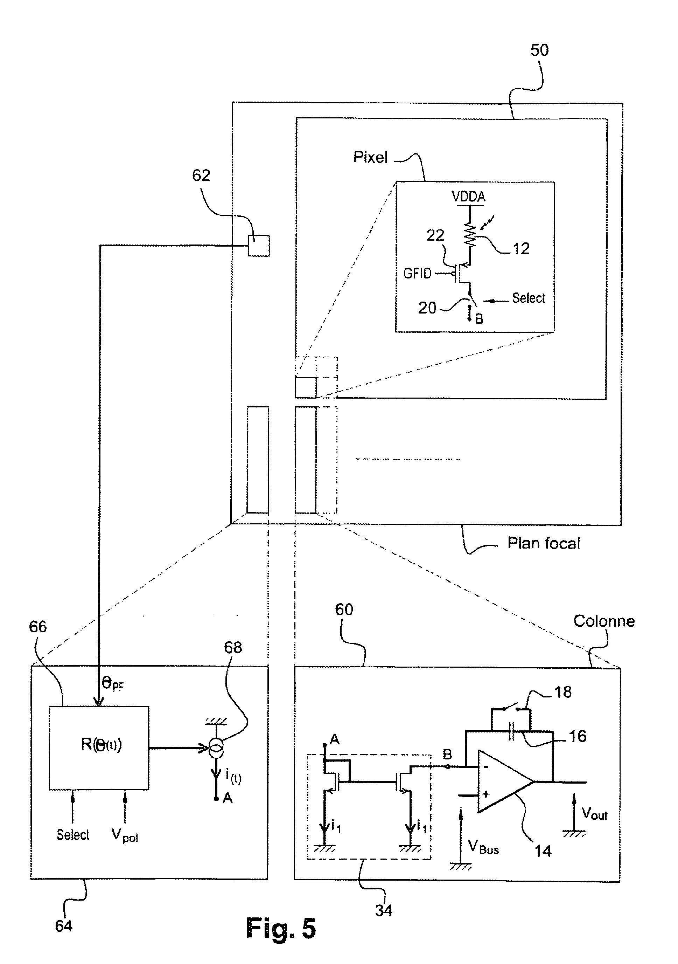

Un détecteur bolométrique selon l'invention est illustré à la figure 5. Comme cela a été décrit précédemment en relation avec les figures 2 à 4, le détecteur comporte une matrice de pixels bolométriques **50,** chacun des pixels comportant un bolomètre d'imagerie **12,** un transistor MOS **22** et un interrupteur de lecture **20.** Chaque colonne de la matrice **50** est associée à une circuiterie de lecture **60,** réalisée dans un substrat agencé dans le plan focal d'une optique (non représentée) et sous-jacent à la matrice **50.** La circuiterie **60** comporte un intégrateur, formé d'un amplificateur opérationnel **14,** d'un condensateur **16** et d'un interrupteur de remise à zéro **18,** ainsi qu'un miroir de courant **34.**

Selon l'invention, le détecteur comporte un capteur de température **62** mesurant la température $\theta_{PF}$ du plan focal, et un module **64** de réjection de mode commun connecté au capteur de température **62.**

Le module de réjection **64** comporte un module numérique d'estimation **66** et un générateur de courant **68** piloté par le module **66,** et connecté à la première branche des miroirs de courant **34** des circuiteries **60.**

Le module numérique d'estimation **66** reçoit la température mesurée $\theta_{PF}$ du plan focal, et estime à partir de cette mesure l'évolution dans le temps du courant de la résistance d'un bolomètre d'imagerie **12** de la matrice **50,** dans le cas où ce dernier est polarisé à une tension de polarisation $V_{pol}$ par le transistor MOS **22** et voit une ambiance thermique de référence, telle que produirait per exemple un écran opaque isotherme au substrat. On notera que la tension de polarisation $V_{pol}$ est constante et connue.

Par exemple, dans le cas où le matériau sensible de la membrane des bolomètres d'imagerie **12** est du type semi-conducteur (par exemple de silicium amorphe ou de l'oxyde de vanadium), le module numérique d'estimation **66** se fonde sur le modèle thermique de la résistance du bolomètre d'imagerie selon les relations :

$$C_{th} \times \frac{\partial \Delta\theta(t)}{\partial t} = \frac{V_{pol}^2}{R_b(\theta(t))} - \frac{\Delta\theta(t)}{R_{th}} + W(IR) \qquad (4)$$

$$R_b(\theta(t)) = R_0 \times e^{\frac{E_a}{K \times \theta(t)}} \qquad (5)$$

où :

- $t$ est le temps,
- $R_{th}$ est la résistance thermique des bras de soutien de la membrane,
- $C_{th}$ est la capacité calorifique du bolomètre,
- $E_A$ est une énergie d'activation prédéterminée du bolomètre,
- $K$ est la constante de Bolzmann,
- $R_0$ est la résistance de référence du bolomètre quand la température tend vers l'infini,
- $\theta(t)$ est la température absolue du bolomètre, et $\Delta\theta(t)$ son échauffement par rapport au substrat,
- $R_b(\theta(t))$ la résistance du bolomètre.
- $W(IR)$ puissance du flux infra rouge incident de référence

Par exemple, le module numérique **66** met en oeuvre un solveur d'équation différentielle logiciel, comme cela est bien connu en soi de l'état de la technique.

Le générateur de courant **68** est commandé par le module numérique d'estimation **66** et produit alors un courant *i(t)* selon la relation :

$$i(t) = \frac{V_{pol}}{R_b(\theta(t))} \qquad (6)$$

Le fonctionnement du circuit **64** de réjection de mode commun est ainsi le suivant.

Lors de la sélection d'une ligne pour la lecture des bolomètres d'imagerie de celle-ci (basculement du signal « Select », fermeture des interrupteurs de lecture **20** de cette ligne et polarisation des bolomètres **12** par les transistors MOS **22),** la mesure $\theta_{PF}$ de la température du substrat est mémorisée par le module 66 et la résistance initiale $R_b$(t=0) calculée selon la relation :

$$R_b(t=0) = R_0 \times e^{\frac{E_a}{K \times \theta_{PF}(t=0)}}$$

Le module numérique d'estimation **66** estime alors l'évolution temporelle de la résistance des bolomètres d'imagerie **12** en résolvant le système d'équations (4) et (5). Le générateur de courant **68** génère le courant *i(t)* correspondant, courant qui est alors répliqué sur la seconde branche des miroirs de courant **34.** Le courant *i(t)* est ainsi retranché à chacun des courants circulant dans les bolomètres d'imagerie de la ligne en cours de lecture, obtenant ainsi une rejection du mode commun et une compensation de l'auto-échauffement de ceux-ci.

Selon une variante avantageuse, le courant de compensation est directement (sans résolution d'équation) calculé en fonction du temps, sous forme polynomiale typiquement. Le polynôme adapté est obtenu à partir de l'approximation linéaire des équations 4 et 5. Cette variante, pertinente notamment si la période d'intégration est très courte, permet une économie très conséquente de temps et de moyens de calcul.

La formation du courant de référence à l'aide de moyens de calcul et d'un traitement numérique présente l'avantage de la flexibilité par rapport à la technique antérieure, puisqu'il est possible de mémoriser de manière ajustable les paramètres d'estimation utilisés par le module d'estimation dans une mémoire, intégrée ou non au substrat.

La présente invention trouve application dans le domaine des capteurs d'image ou thermométriques à détection bolométrique, quelle que soit la bande de fréquences de détection ou du type de matériau bolométrique utilisé pour fabriquer les bolomètres d'imagerie et de référence, comme par exemple du silicium amorphe (a-Si), les oxydes de vanadium (VOx), du métal (Ti).

De même la présente invention trouve application dans la pyrométrie infrarouge, l'aide à la conduite de véhicule automobile par la détection de piétons par imagerie infrarouge, la spectrométrie infrarouge, la mesure de gaz infrarouge et de manière plus générale aux mesures physiques fondées sur des bolomètres résistifs.

**Revendications**

1. Dispositif pour la détection d'un rayonnement électromagnétique comprenant :

   ■ un bolomètre résistif (12),
   ■ un circuit de polarisation (22) en tension apte à appliquer entre deux bornes du bolomètre une tension de polarisation prédéterminée et constante (12),
   ■ un module de réjection (62, 66, 68) apte à générer un courant de mode commun indépendant du courant circulant dans le bolomètre (12) ;
   ■ un circuit de mesure (60) apte à être connecté au bolomètre (12) et au module de rejection (62, 66, 68) pour soustraire du courant circulant dans le bolomètre (12) lors de sa polarisation le courant de mode commun généré par le module de réjection (62, 66, 68), et pour mesurer la différence de courant résultante, ledit circuit de mesure (60) étant constitué d'un amplificateur opérationnel (14) contre-réactionné par un condensateur (16) entre l'entrée inverseuse et la sortie dudit amplificateur (14), la différence de courant étant reçue sur l'entrée inverseuse de l'amplificateur (14) et l'entrée non inverseuse de l'amplificateur (14) étant portée à un potentiel constant,

ledit circuit de polarisation comportant une source de tension constante connectée à une borne du bolomètre résistif (12), un interrupteur (20) de lecture pivotable dont une borne est connecté à l'entrée inverseuse de l'amplificateur opérationnel (14) et un transistor MOS (22) d'injection, dont la grille est mise à une tension constante prédéterminée, dont la source est connectée à l'autre borne du bolomètre (12), et dont le drain est connecté à l'autre borne de l'interrupteur (20) de sélection,
ledit module de réjection (62, 66, 68) comprenant :

■ un module d'estimation (62, 66) d'un courant circulant dans le bolomètre résistif (12) soumis à la tension de polarisation et insensibilisé au rayonnement électromagnétique ; et
■ un générateur de courant (68) piloté par le module d'estimation et générant le courant estimé par celui-ci en tant que courant de mode commun.

2.  Dispositif pour la détection d'un rayonnement électromagnétique selon la revendication 1, où le bolomètre (12) comporte une membrane suspendue au dessus d'un substrat destiné à être agencé dans le plan focal d'une optique, et en ce que le module d'estimation (62, 66) comprend :

■ au moins un capteur de température (62) apte à mesurer une température du substrat ; et
■ un module de calcul (66) du courant de mode commun en fonction de la température du substrat mesurée et d'un modèle thermique du bolomètre résistif.

3.  Détecteur bolométrique comportant une matrice (50) de bolomètres résistifs (12), chacun des bolomètres (12) étant associé à un circuit de polarisation en tension (22) apte à appliquer entre deux bornes du bolomètre une tension de polarisation prédéterminée et constante, un module de réjection (62, 66, 68) apte à générer un courant de mode commun indépendant du courant circulant dans le bolomètre (12), et un circuit de mesure (60) apte à être connecté au bolomètre (12) et au module de rejection (62, 66, 68) pour soustraire du courant circulant dans le bolomètre (12) lors de sa polarisation le courant de mode commun généré par le module de réjection (62, 66, 68), et pour mesurer la différence de courant résultante, ledit circuit de mesure (60) étant constitué d'un amplificateur opérationnel (14) contre-réactionné par un condensateur (16) entre l'entrée inverseuse et la sortie dudit amplificateur (14), la différence de courant étant reçue sur l'entrée inverseuse de l'amplificateur (14) et l'entrée non inverseuse de l'amplificateur (14) étant portée à un potentiel constant et ledit circuit de polarisation comportant une source de tension constante connectée à une borne du bolomètre résistif (12), un interrupteur (20) de lecture pilotable dont une borne est connecté à l'entrée inverseuse de l'amplificateur opérationnel (14) et un transistor MOS (22) d'injection, dont la grille est mise à une tension constante prédéterminée, dont la source est connectée à l'autre borne du bolomètre (12), et dont le drain est connecté à l'autre borne de l'interrupteur (20) de sélection,
ledit module de réjection (62, 66, 68) comprenant

■ un module d'estimation (62, 66) d'un courant circulant dans le bolomètre résistif (12) soumis à la tension de polarisation et insensibilisé au rayonnement électromagnétique ; et
■ un générateur de courant (68) piloté par le module d'estimation et générant le courant estimé par celui-ci en tant que courant de mode commun.

4.  Détecteur bolométriques selon la revendication 3, où le module d'estimation (62, 66) fournit une valeur de courant de mode commun représentative de l'auto-échauffement d'un bolomètre soumis à une tension de polarisation durant son cycle de mesure.

5.  Détecteur bolométrique selon la revendication 4, où le module d'estimation (62, 66) utilise un modèle simplifié linéaire des équations différentielles décrivant l'évolution du courant du bolomètre sous l'effet de la polarisation durant son cycle de mesure.

6.  Détecteur bolométrique selon la revendication 3, où le circuit de polarisation (22), le circuit de mesure (60), le capteur de température (62) et le générateur de courant (68) sont formés dans le substrat.

7.  Détecteur bolométrique selon l'une des revendications 3 à 6, où le courant fourni par le module de réjection (68) est recopié dans chaque colonne par un miroir de courant formé dans le substrat.

8.  Détecteur bolométrique selon la revendication 7, où le module d'estimation (62, 66) est formé dans le substrat.

9. Détecteur bolométrique selon la revendication 8, où les paramètres nécessaires au module d'estimation sont enregistrés dans une mémoire formée dans le substrat.

**Claims**

1. A device for detecting electromagnetic radiation comprising:

   ■ a resistive bolometer (12),
   ■ a biasing circuit (22) capable of applying a predetermined and constant bias voltage at two terminals of said bolometer,
   ■ a rejection module (62, 66, 68) capable of generating a common mode current independent from the current flowing through the bolometer (12),
   ■ a measuring circuit (60) capable of being connected to the bolometer (12) and the rejection module (62, 66, 68) in order to subtract the common mode current generated by the rejection module (62, 66, 68) from the current flowing through the bolometer (12) when it is biased, and to measure the resulting difference, said measuring circuit (60) being constituted of an operational amplifier (14) counter-reactionned with a capacitor (16) connected between the inverting input and the output of said amplifier (14), the current difference being received at the inverting input of the amplifier and the non-inverting input of the amplifier (14) being subjected to a constant voltage;

   said biasing circuit comprising a constant voltage input connected to a terminal of the bolometer (12), a controllable read switch (20) controllable, of which one terminal is connected to the inverting input of the operational amplifier (14) and a MOS injection transistor (22), the gate of which being kept at a constant predetermined voltage, the source of which being connected to the other terminal of the bolometer (12), and the drain of which being connected to the other terminal of the read switch (20) ;
   said rejection module (62, 66, 68) comprising:

   ■ a module (62, 66) for estimating a current that flows through the resistive bolometer (12) when it is subjected to the bias voltage and made insensitive to the electromagnetic radiation; and
   ■ a current generator (68) which is controlled by the estimation module and generates the current estimated by the latter as a common mode current.

2. The device for detecting electromagnetic radiation as claimed in claim 1, where the bolometer (12) comprises a membrane suspended above a substrate designed to be positioned in the focal plane of optics and in that estimation module (62, 66) comprises:

   ■ at least one thermal sensor (62) capable of measuring a temperature of the substrate; and
   ■ a module (66) for calculating the common mode current as a function of the measured temperature of the substrate and a thermal model of the resistive bolometer.

3. A bolometric detector comprising an array (50) of resistive bolometers (12), each of the bolometers (12) being associated with a biasing circuit (22) capable of applying a predetermined and constant bias voltage between the two terminals of said bolometer (12), a rejection module (62, 66, 68) capable of generating a common mode current independent from the current flowing through the bolometer (12), and a measuring circuit (60) capable of being connected to the bolometer (12) and to the rejection module (62, 66, 68) in order to subtract the common mode current generated by the rejection module (62, 66, 68) from the current flowing through the bolometer (12) when it is biased, and to measure the resulting difference, said measuring circuit (60) being constituted of an operational amplifier (14) counter-reactionned with a capacitor (16) connected between the inverting input and the output of said amplifier (14), the current difference being received at the inverting input of the amplifier and the non-inverting input of the amplifier (14) being subjected to a constant voltage, said biasing circuit comprising a constant voltage input connected to a terminal of the bolometer (12), a controllable read switch (20) controllable, of which one terminal is connected to the inverting input of the operational amplifier (14) and a MOS injection transistor (22), the gate of which being kept at a constant predetermined voltage, the source of which being connected to the other terminal of the bolometer (12), and the drain of which being connected to the other terminal of the read switch (20) ;
   said rejection module (62, 66, 68) comprising:

   ■ a module (62, 66) for estimating a current that flows through resistive bolometer (12) when it is subjected to the bias voltage and made insensitive to the electromagnetic radiation; and
■ a current generator (68) which is controlled by the estimation module and generates the current estimated by the latter as a common mode current.

4. The bolometric detector as claimed in claim 3, where the estimation module (62, 66) supplies a common mode current value which is representative of the self-heating of a bolometer which is subjected to a bias voltage during its measurement cycle.

5. The bolometric detector as claimed in claim 4, where the estimation module (62, 66) uses a simplified linear model of differential equations which describe variations in the current of the bolometer due to the effect of biasing during its measurement cycle.

6. The bolometric detector as claimed in claim 3, where the biasing circuit (22), the measuring circuit (60), the thermal sensor (62) and the current generator (68) are formed in the substrate.

7. The bolometric detector as claimed in any of claims 3 to 6, where the current supplied by the rejection module (68) is copied to each row by the current mirror formed in the substrate.

8. The bolometric detector as claimed in claim 7, where the estimation module (62, 66) is formed in the substrate.

9. The bolometric detector as claimed in claim 8, where the parameters which the estimation module needs are stored in memory formed in the substrate.

**Patentansprüche**

1. Vorrichtung zum Erfassen einer elektromagnetischer Strahlung mit:

   - einem resistiven Bolometer (12),
   - einer Spannungspolarisierungsschaltung (22), die geeignet ist, eine vorgegebene und konstante Polarisationsspannung (12) zwischen zwei Bolometerklemmen anzulegen,
   - einem Unterdrückungsmodul (62, 66, 68) das geeignet ist, einen von dem in dem Bolometer (12) fließenden Strom unabhängigen Gleichtaktstrom zu erzeugen,
   - einer Messschaltung (60), die geeignet ist, an das Bolometer (12) und an das Unterdrückungsmodul (62, 66, 68) angeschlossen zu werden, um von dem in dem Bolometer (12) fließenden Strom bei dessen Polarisierung den von dem Unterdrückungsmodul (62, 66, 68) erzeugten Gleichtaktstrom abzuziehen und die resultierende Stromdifferenz zu messen, wobei die Messschaltung (60) durch einen funktionsfähigen Verstärker (14) gebildet ist, der durch einen Kondensator (16) zwischen dem invertierenden Eingang und dem Ausgang des Verstärkers (14) rückgekoppelt wird, wobei die Stromdifferenz dem invertierenden Eingang des Verstärkers (14) zugeführt wird und der nicht invertierende Eingang des Verstärkers (14) auf ein konstantes Potenzial gesetzt wird,

   wobei die Polarisierungsschaltung eine Quelle konstanter Spannung, die an eine Klemme des resistiven Bolometers (12) angeschlossen ist, einen steuerbaren Leseschalter (20), bei dem eine Klemme an den invertierenden Eingang des funktionsfähigen Verstärkers (14) angeschlossen ist, und einen MOS-Injektionstransistor (22), dessen Gitter auf eine vorgegebene konstante Spannung gesetzt wird, dessen Source an die andere Klemme des Bolometers (12) angeschlossen ist und dessen Drain an die andere Klemme des Wählschalters (20) angeschlossen ist, aufweist, wobei das Unterdrückungsmodul (62, 66, 68) Folgendes umfasst:

   - ein Modul (62, 66) zum Schätzen eines Stroms, der in dem resistiven Bolometer (12) fließt, welches der Polarisationsspannung ausgesetzt ist und gegenüber der elektromagnetischen Strahlung desensibilisiert ist, und
   - einen Stromgenerator (68), der durch das Schätzmodul gesteuert wird und den von diesem geschätzten Strom als Gleichtaktstrom erzeugt.

2. Vorrichtung zum Erfassen einer elektromagnetischen Strahlung nach Anspruch 1, bei der das Bolometer (12) eine Membran aufweist, die über einem Substrat aufgehängt ist, das dazu bestimmt ist, in der Fokalebene einer Optik angeordnet zu werden, und bei der das Schätzmodul (62, 66) Folgendes umfasst:

   - mindestens einen Temperaturfühler (62) der geeignet ist, eine Substrattemperatur zu messen, und

- ein Modul (66), um den Gleichtaktstrom in Abhängigkeit von der gemessenen Substrattemperatur und von einem thermischen Modell des resistiven Bolometers zu berechnen.

3. Bolometrischer Detektor mit einer Matrix (50) aus resistiven Bolometern (12), wobei jedes der Bolometer (12) einer Spannungspolarisierungsschaltung (22) zugeordnet ist, die geeignet ist, eine vorgegebene und konstante Polarisationsspannung zwischen zwei Bolometerklemmen anzulegen, einem Unterdrückungsmodul (62, 66, 68), das geeignet ist, einen von dem in dem Bolometer (12) fließenden Strom unabhängigen Gleichtaktstrom zu erzeugen, und einer Messschaltung (60), die geeignet ist, an das Bolometer (12) und an das Unterdrückungsmodul (62, 66, 68) angeschlossen zu werden, um von dem in dem Bolometer (12) fließenden Strom bei dessen Polarisierung den von dem Unterdrükkungsmodul (62, 66, 68) erzeugten Gleichtaktstrom abzuziehen und die resultierende Stromdifferenz zu messen, wobei die Messschaltung (60) durch einen funktionsfähigen Verstärker (14) gebildet ist, der durch einen Kondensator (16) zwischen dem invertierenden Eingang und dem Ausgang des Verstärkers (14) rückgekoppelt wird, wobei die Stromdifferenz dem invertierenden Eingang des Verstärkers (14) zugeführt wird und der nicht invertierende Eingang des Verstärkers (14) auf ein konstantes Potenzial gesetzt wird, und wobei die Polarisierungsschaltung eine Quelle konstanter Spannung, die an eine Klemme des resistiven Bolometers (12) angeschlossen ist, einen steuerbaren Leseschalter (20), bei dem eine Klemme an den invertierenden Eingang des funktionsfähigen Verstärkers (14) angeschlossen ist, und einen MOS-Injektionstransistor (22), dessen Gitter auf eine vorgegebene konstante Spannung gesetzt wird, dessen Source an die andere Klemme des Bolometers (12) angeschlossen ist und dessen Drain an die andere Klemme des Wählschalters (20) angeschlossen ist, aufweist, wobei das Unterdrückungsmodul (62, 66, 68) Folgendes umfasst:

   - ein Modul (62, 66) zum Schätzen eines Stroms, der in dem resistiven Bolometer (12) fließt, welches der Polarisationsspannung ausgesetzt ist und gegenüber der elektromagnetischen Strahlung desensibilisiert ist, und
   - einen Stromgenerator (68), der durch das Schätzmodul gesteuert wird und den von diesem geschätzten Strom als Gleichtaktstrom erzeugt.

4. Bolometrischer Detektor nach Anspruch 3, bei dem das Schätzmodul (62, 66) einen Wert für den Gleichtaktstrom liefert, der für die Selbsterhitzung eines Bolometers repräsentativ ist, das während seines Messzyklus einer Polarisationsspannung ausgesetzt ist.

5. Bolometrischer Detektor nach Anspruch 4, bei dem das Schätzmodul (62, 66) ein vereinfachtes lineares Modell der Differentialgleichungen verwendet, welche den Verlauf des Stroms des Bolometers unter der Wirkung der Polarisierung während dessen Messzyklus beschreiben.

6. Bolometrischer Detektor nach Anspruch 3, bei dem die Polarisierungsschaltung (22), die Messschaltung (60), der Temperaturfühler (62) und der Stromgenerator (68) in dem Substrat ausgebildet sind.

7. Bolometrischer Detektor nach einem der Ansprüche 3 bis 6, bei dem der von dem Unterdrückungsmodul (68) bereitgestellte Strom in jede Spalte durch einen in dem Substrat ausgebildeten Stromspiegel kopiert wird.

8. Bolometrischer Detektor nach Anspruch 7, bei dem das Schätzmodul (62, 66) in dem Substrat ausgebildet ist.

9. Bolometrischer Detektor nach Anspruch 8, bei dem die für das Schätzmodul erforderlichen Parameter in einem in dem Substrat ausgebildeten Speicher gespeichert sind.

VDDA

12 — IR

GFID — 22

Select — 20

Reset

18

16

14

10

-23-

$V_{Bus}$

$V_{out}$

# Fig. 1

ART ANTERIEUR

VDDA

$i_1$

26

GFID — 32

28

30

A

$i_1$

VDDA

$i_2$

12 — IR

GFID — 22

Select — 20

B

$i_2$ - $i_1$

$i_1$

34

24

Reset

18

16

14

10

-23-

$V_{Bus}$

$V_{out}$

# Fig. 2

## Fig. 3

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002074499 A1
- US 6791610 B1
- EP 1211888 A1
- US 2003160171 A1

**Littérature non-brevet citée dans la description**

- **YUTAKA TANAKE et al.** Performance of 320x240 Uncooled Bolometer-type Infrared Focal Plane Arrays. *Proc. SPIE,* vol. 5074